**Europäisches Patentamt**

**European Patent Office**

**Office européen des brevets**

(19)

(11) Numéro de publication: **0 058 619**
**B1**

(12) **FASCICULE DE BREVET EUROPEEN**

(45) Date de publication du fascicule du brevet:
03.10.84

(51) Int. Cl.³: **F 02 B 69/06, F 02 D 13/00**

(21) Numéro de dépôt: **82400254.7**

(22) Date de dépôt: **12.02.82**

(54) Moteur thermique à quatre temps susceptible de surpuissance temporaire.

(30) Priorité: **18.02.81 FR 8103201**

(43) Date de publication de la demande:
**25.08.82 Bulletin 82/34**

(45) Mention de la délivrance du brevet:
**03.10.84 Bulletin 84/40**

(84) Etats contractants désignés:
**DE GB IT SE**

(56) Documents cités:
**DE - C - 420 113**
**DE - C - 544 741**
**US - A - 4 009 695**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Chareire, Jean-Louis, 66 rue Aristide Briand, F-92300 Levallois (FR)**

(74) Mandataire: **Bonnetat, Christian, Cabinet PROPI Conseils 23 rue de Léningrad, F-75008 Paris (FR)**

ACTORUM AG

## Description

La présente invention concerne un moteur thermique à faible consommation alimenté à l'aide d'air et de tout carburant usuel (essence, gazole, alcool, etc.) et destiné notamment à la propulsion d'un véhicule.

On sait que, parmi les causes du mauvais rendement énergétique des groupes motopropulsifs actuels, on peut citer:

a) le fait que les véhicules utilisent leur moteur dans des conditions de vitesse et de puissance très variables alors que les réglages concernant la carburation, l'admission et l'échappement ne sont optimisés que pour une vitesse et une puissance, et

b) le fait que ces véhicules utilisent leur moteur, dans la plupart des cas, à une vitesse beaucoup plus élevée que celle qui serait nécessaire à l'obtention de la puissance désirée, afin de pouvoir disposer subitement d'un fort excès de puissance sans modifier le régime du moteur (reprise du véhicule).

L'invention concerne plus particulièrement le point b ci-dessus.

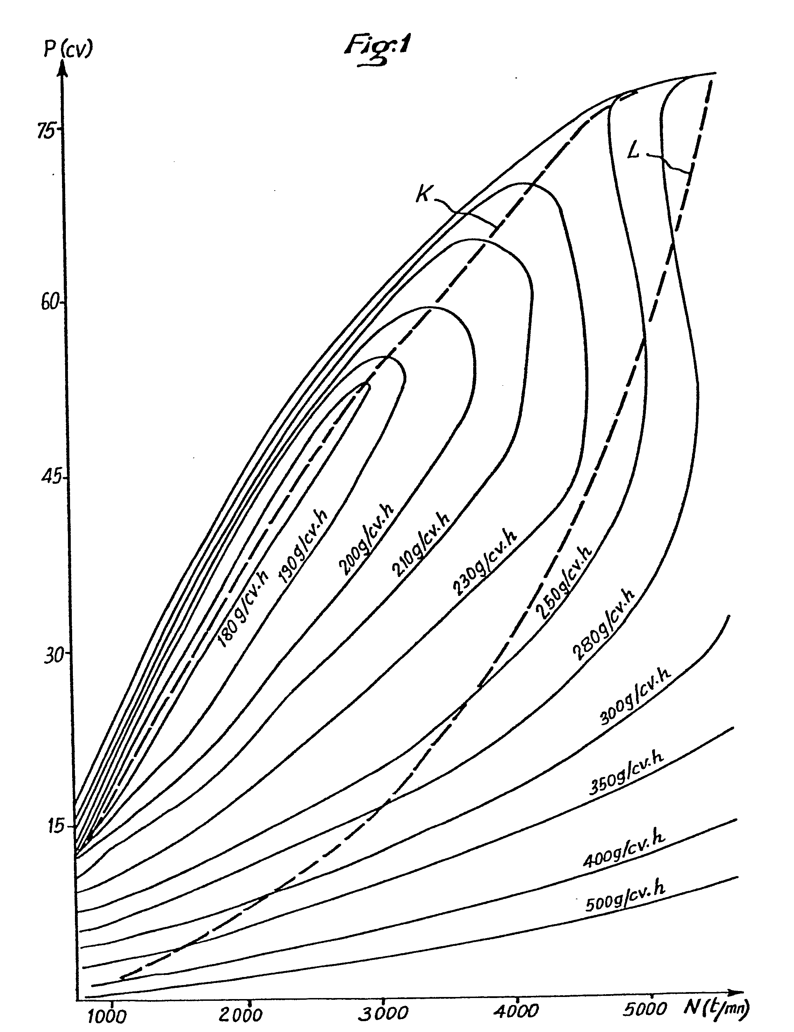

Si l'on considère sur la fig. 1 un exemple de courbes de consommation spécifique en fonction de la vitesse de rotation N du moteur et de la puissance P demandée, on constate de façon nette qu'on a intérêt, pour une même puissance, à faire tourner le moteur le moins vite possible. Le point de fonctionnement du moteur devrait, selon la puissance désirée, se trouver toujours sur la courbe de consommation minimale K qui est, comme on le voit, très près de celle de la puissance maximale que peut fournir le moteur à chacun de ses régimes. En pratique, sur une automobile actuelle, les rapports de transmission sont tels que la courbe L sur laquelle se trouvent les points de fonctionnement du moteur est beaucoup plus basse. Le moteur tourne donc plus vite qu'il ne suffirait mais, en contrepartie, il possède une forte réserve de puissance à chaque régime (sauf à proximité de la zone d'utilisation à puissance maximale, évidemment).

L'objet de la présente invention est donc de permettre, tout en ayant un point de fonctionnement du moteur très proche de la courbe K de consommation spécifique minimale du moteur, d'avoir néanmoins une importante réserve de puissance disponible instantanément.

On remarquera que le document DE-C No 420113 décrit un moteur du type à cycle à quatre temps, susceptible d'être mis en fonctionnement selon un cycle à deux temps, pour agrandir son domaine d'utilisation, par exemple lorsqu'il est nécessaire d'avoir un bon couple à bas régime. Le passage du fonctionnement selon un cycle à quatre temps ou à deux temps est recyclé mécaniquement.

Pour résoudre le problème mentionné ci-dessus, la présente invention met également en œuvre un moteur à quatre temps susceptible de fonctionner selon un cycle à deux temps.

A cette fin, selon l'invention, l'ensemble d'un moteur thermique du type à cycle à quatre temps,

pourvu de soupapes d'admission et d'échappement et de moyens susceptibles de mettre ledit moteur en fonctionnement selon un cycle à deux temps, est caractérisé en ce qu'il est pourvu d'un système de commande comportant un calculateur qui règle l'ouverture et la fermeture desdites soupapes et qui impose audit moteur un fonctionnement proche de celui correspondant à la consommation spécifique minimale en carburant, et en ce que ledit système comporte des moyens susceptibles de détecter les surcharges du moteur et des moyens susceptibles de faire fonctionner exceptionnellement le moteur selon un cycle à deux temps, ces derniers moyens étant actionnés par lesdits moyens de détection, lorsque la surcharge détectée dépasse un seuil prédéterminé, pour qu'alors le moteur passe en fonctionnement à deux temps, le fonctionnement à quatre temps étant rétabli dès que la surcharge a disparu.

La présente invention se situe donc dans le cadre d'un véhicule dont au moins certaines fonctions mécaniques sont gérées par un calculateur convenablement programmé.

Une telle disposition est déjà connue et ses solutions pratiques relèvent simplement d'une bonne connaissance de la mise au point de logiciels.

Par exemple, le document US-A No 4009695 décrit un système de commande d'un moteur à quatre temps, comportant un calculateur qui règle l'ouverture et la fermeture des soupapes d'admission et d'échappement en fonction des conditions de fonctionnement souhaitées. Toutefois, ce moteur n'est pas prévu pour l'utilisation à deux temps.

Parmi les fonctions que l'on peut gérer par calculateur se trouvent notamment la carburation et les positions d'ouverture et de fermeture des soupapes d'admission et d'échappement. La cause a mentionnée ci-dessus de mauvais rendement du groupe motopropulsif peut être ainsi considérablement diminuée. Cependant, il est nécessaire de disposer d'une commande individuelle de mouvement de chaque soupape, répondant aux ordres du calculateur. Ce genre de commande peut être de différents types connus. On peut citer les systèmes de poussage électromagnétique (comprenant un solénoïde sous diverses formes) ou les systèmes hydro-électromagnétiques. Ces derniers systèmes, beaucoup moins encombrants, se schématisent par une force motrice hydraulique commandée par un tiroir électromagnétique. La fiabilité de ces systèmes peut être très bonne et leur consommation d'énergie au maximum égale à celle d'un arbre à cames classique, qui est bien entendu supprimé sur de tels moteurs à commande par calculateur.

Les moyens de détection de surcharge mis en œuvre par l'invention peuvent être de tout type connu, par exemple dans les dispositifs de changement automatique de vitesses.

Ainsi, selon l'invention, le cycle nominal du moteur est à quatre temps, ce qui conduit à un bon rendement et à une faible pollution (notamment par huile). Lors des accélérations ou des montées

de côtes, le cycle passe à deux temps et on peut ajouter éventuellement une suralimentation pour la mise en marche d'un compresseur, de préférence électrique. Ainsi, pour un même régime, la puissance peut être multipliée par deux à trois selon le taux de suralimentation.

Cette utilisation en cycle à deux temps n'est que transitoire. Elle donne le temps à l'ensemble du groupe motopropulsif d'augmenter suffisamment la vitesse du moteur, donc sa puissance.

La chambre de combustion du moteur est en tous points semblable à celle d'un moteur à quatre temps ordinaire. Les soupapes d'admission et d'échappement sont commandées individuellement par le calculateur, au moyen d'un système hydro-électromagnétique par exemple.

La partie basse du moteur peut en revanche être semblable à celle d'un moteur à deux temps classique, sauf en ce qui concerne l'ouverture (lumière) et le canal d'échappement qui sont supprimés.

Sur la branche inférieure de la tubulure d'admission, on peut disposer un compresseur de suralimentation classique commandé par un moteur électrique. Le compresseur peut, dans une variante de l'invention, être placé de manière à fonctionner indifféremment pour la suralimentation du moteur fonctionnant à deux ou à quatre temps. Dans ce cas, la tubulure d'admission basse (vers le carter) sera obturée par une électrovanne lorsque le moteur fonctionnera à quatre temps.

Sur la partie supérieure des canaux de transfert (deux canaux disposés de manière à créer la turbulence maximale dans la chambre de combustion), on dispose une électrovanne située à la limite du cylindre.

Le fonctionnement est le suivant. En régime à quatre temps, l'admission et l'échappement se font par les soupapes de la chambre de combustion comme habituellement. L'ordre d'ouverture de celles-ci en régime à quatre temps est fourni par le calculateur.

Les électrovannes des canaux de transfert sont fermées et le compresseur est arrêté (ou bien l'électrovanne du canal d'admission vers le carter est fermée si le compresseur est commun à l'admission haute et basse, ou s'il n'y a pas de compresseur).

En régime à deux temps, l'admission a lieu dans le carter inférieur par mise en marche du compresseur et (éventuellement) ouverture de l'électrovanne du canal d'admission inférieur. La soupape d'admission du cylindre reste constamment fermée. Les électrovannes des canaux de transfert sont constamment ouvertes et, enfin, la soupape d'échappement reçoit du calculateur l'ordre du fonctionnement selon un cycle à deux temps (une ouverture par tour avec avance par rapport à l'arrivée du piston au point mort bas). S'il n'y a pas de compresseur, le calculateur donne l'ordre d'ouverture du canal d'admission inférieur.

La lubrification de ce type de moteur pose un problème particulier (le refroidissement du piston n'est pas à considérer car il s'échauffe peu, possédant de préférence une tête isolante).

Pour lutter contre la pollution par l'huile, il n'est pas fait appel à la lubrification par mélange d'huile à l'essence.

En effet, le moteur fonctionne le plus souvent en quatre temps.

Il est toutefois nécessaire de ne pas avoir de volume d'huile apparent dans le bas du carter, ce qui serait incompatible avec le fonctionnement à deux temps.

La lubrification est donc assurée par circulation d'huile dans le vilebrequin, la bielle et le piston. L'huile, en quantité juste suffisante, est distribuée au fond de la gorge du segment inférieur du piston, celui-ci possédant un segment racleur supérieur.

La récupération d'huile s'effectue dans le bas du carter grâce à un dispositif de récupération de type connu à carter sec. L'orifice d'évacuation d'huile est choisi suffisamment petit pour ne pas perturber le fonctionnement à deux temps.

Grâce à ce dispositif, le moteur ne consomme de l'huile (en quantité limitée cependant au maximum) que pendant son fonctionnement à deux temps.

Dans une variante de l'invention, le moteur n'utilise plus son carter pour favoriser le remplissage du cylindre en fonctionnement à deux temps.

Dans ce cas, la canalisation basse d'admission débouche directement dans le cylindre au point mort bas au niveau duquel débouchent, dans un moteur à deux temps ordinaire, les canaux de transfert (supprimés dans ce cas); c'est le compresseur qui effectue alors à lui seul tout le travail de remplissage du cylindre, le carter du moteur n'ayant plus le rôle à jouer dans le remplissage. La lubrification par projection d'huile classique peut être utilisée comme dans un moteur à quatre temps ordinaire.

On comprendra bien comment l'invention peut être réalisée en suivant la description ci-après en regard des dessins annexés.

La fig. 2 représente une réalisation selon laquelle le fonctionnement à deux temps met en œuvre un transfert des gaz par le carter.

La fig. 3 représente une réalisation selon laquelle le fonctionnement à deux temps s'effectue sans transfert de gaz.

La fig. 4 représente une réalisation selon laquelle une suralimentation variable est effectuée aussi bien pendant le fonctionnement à deux temps que pendant le fonctionnement à quatre temps.

Sur ces figures, des références identiques désignent des éléments semblables.

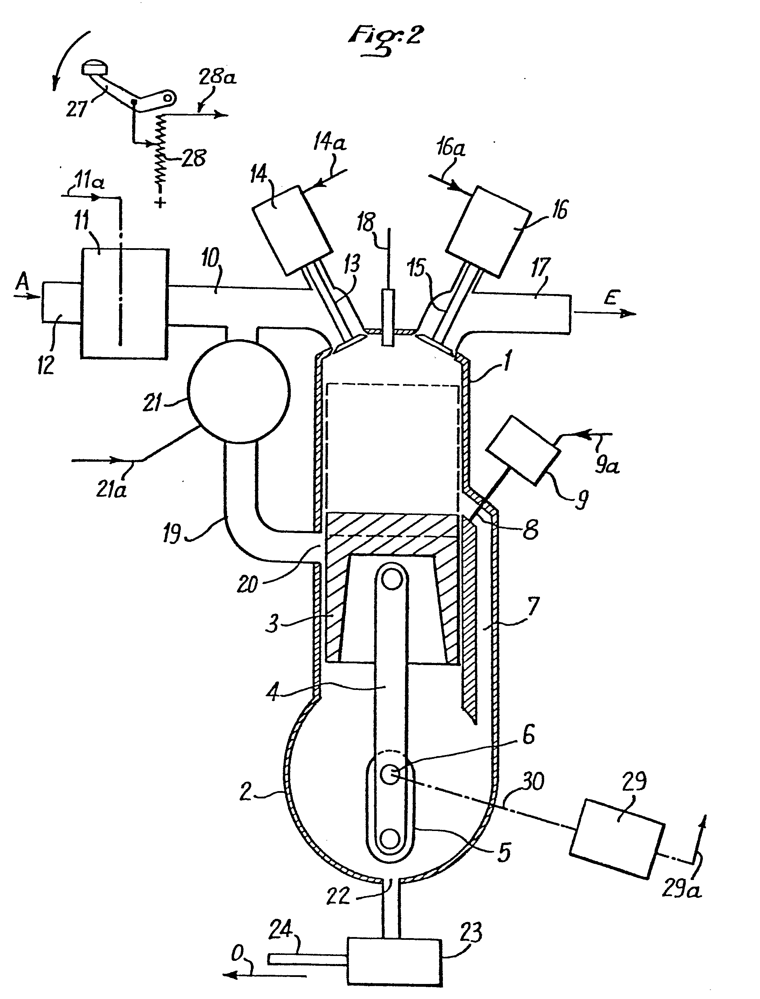

Le mode de réalisation du moteur selon l'invention, illustré par la fig. 2, comporte un cylindre 1 solidaire d'un carter 2.

Un piston 3 coulisse alternativement dans le cylindre 1 entre la position basse (point mort bas) représentée et la position haute (point mort haut) indiquée en pointillés. Le piston 3 est relié par une bielle 4 à un vilebrequin classique 5 tournant autour de l'axe 6. La hauteur du piston 3 est au moins égale à sa course, afin, comme on le verra par la suite, d'obturer l'orifice 20 en position basse et de le découvrir en position haute.

Un ou plusieurs canaux de transfert 7 relient le carter 2 à une ou plusieurs ouvertures (ou lumières) 7a, situées sur la paroi du cylindre 1 immédiatement au-dessus du piston 2 lorsque celui-ci est au point mort bas.

Une vanne 8, commandée par un électro-aimant 9, obture le canal de transfert 7 lorsque le moteur selon l'invention fonctionne suivant un cycle à quatre temps. Elle est commandée par un calculateur (non représenté) auquel elle est reliée par une connexion 9a.

Le haut du cylindre 1, ou culasse, comporte une tubulure d'admission 10 reliée à un dispositif carburateur 11, dans le cas où le moteur selon l'invention n'utilise pas l'injection directe du carburant, ce carburant 11 étant alimenté en air par une pipe 12.

L'orifice par lequel la tubulure 10 débouche dans la culasse est contrôlé par une soupape d'admission 13, commandée de préférence par un dispositif hydro-électromagnétique 14, lui-même commandé par ledit calculateur et relié à celui-ci par une connexion 14a.

La culasse comprend également une tubulure d'échappement 17 dont l'orifice dans ladite culasse est contrôlé par une soupape d'échappement 15 commandée, de préférence, par un dispositif hydro-électromagnétique 16, lui-même commandé par ledit calculateur et relié à celui-ci par une connexion 16a.

Lorsque le moteur fonctionne avec un allumage commandé, celui-ci est effectué à l'aide d'une bougie d'allumage 18, activée par l'intermédiaire dudit calculateur.

Lorsque ledit moteur fonctionne avec auto-allumage, la bougie d'allumage 18 est remplacée par une bougie de réchauffage et éventuellement un injecteur, par exemple un injecteur de gazole (fonctionnement en diesel). Dans ce cas, le dispositif carburateur 11 est supprimé.

Entre le carburateur 11 et le siège de la soupape 13, la tubulure 10 comporte un canal de dérivation 19 qui la relie au cylindre 1 à l'aide d'une lumière 20 placée dans la paroi de celui-ci, immédiatement en dessous du piston 3 lorsqu'il est au point mort haut (mais obturée par ledit piston au point mort bas), et par l'intermédiaire soit d'un compresseur, soit d'une électrovanne, représentés en 21. Le compresseur 21 se comporte à l'arrêt comme une électrovanne et, dans ce cas, obture le canal 19. Il est activé, de préférence, par un moteur électrique commandé par ledit calculateur auquel il est relié par une connexion 21a. Il peut également être actionné par l'arbre du moteur à l'aide d'un embrayage électromagnétique. Selon son régime, le compresseur 21 fournit à sa sortie une pression absolue de 1 à 4 bar et n'est activé que lorsque le moteur fonctionne en cycle à deux temps. De même, lorsqu'il est remplacé par une simple électrovanne, celle-ci n'est activée à l'ouverture que pour un fonctionnement à deux temps.

Le bas du carter 2 est relié par un orifice 22 à un dispositif 23 de récupération d'huile connu, du type à carter sec, qui évacue l'huile du carter vers un réservoir par l'intermédiaire d'un conduit 24.

Le carburateur 11 est commandé par un dispositif électromécanique qui reçoit ses ordres du calculateur (liaison 11a). L'ordre d'accélération donné par le conducteur ne se traduit donc pas par une augmentation proportionnelle du débit du gaz. Le réglage de ce débit tient compte du régime du moteur, de la puissance qui lui est demandée, du cycle de fonctionnement (à deux ou quatre temps), de la vitesse du compresseur de suralimentation et de la tendance à l'apparition du phénomène de cliquetis. Ces divers éléments (ainsi que d'autres si nécessaire) sont pris en charge sans difficulté par le logiciel du calculateur. L'ordre du conducteur est transmis au calculateur à l'aide d'une pédale 27 activant un transmetteur de position 28.

Il est possible de transmettre au calculateur la valeur de la charge appliquée au moteur à l'aide d'un couplemètre 29 relié à l'arbre du moteur 6 par une liaison 30, et audit calculateur par une liaison 29a.

En régime de charge normale, le calculateur commande le fonctionnement du moteur selon un cycle à quatre temps en suivant la courbe K de consommation minimale. Dans ce cas, l'alimentation en carburant se fait par la tubulure 10 et la soupape 13, et l'échappement des gaz à travers la soupape 15 et la tubulure 17; de plus, la tubulure 19 est obturée par le compresseur 21 et il en est de même des canaux de transfert 7 par les vannes 8.

Lorsqu'un ordre d'accélération, donc de surcharge pour la vitesse actuelle du moteur, est donné par le conducteur, le calculateur impose immédiatement le fonctionnement en cycle à deux temps, ainsi qu'une suralimentation partielle. Le taux de suralimentation lié à la vitesse du compresseur sera déterminé par le calculateur, qui prendra en compte, d'une part, la nécessité pour répondre au désir du conducteur de fournir une puissance instantanée suffisante et, d'autre part, la nécessité de limiter le remplissage du moteur à une valeur ne risquant pas de provoquer le phénomène néfaste de cliquetis. Un détecteur (connu) de cliquetis sera donc utilisé et ses indications serviront au calculateur pour déterminer le taux maximal de suralimentation instantanée, ainsi que l'avance à l'allumage appropriée.

Dès que le processus de surpuissance momentanée (changement de cycle quatre temps/deux temps et suralimentation éventuelle) cesse d'être indispensable, soit parce que l'augmentation du régime du moteur obtenue pendant leur fonctionnement permet de se satisfaire de la nouvelle puissance au point de consommation minimal en cycle à quatre temps, soit parce qu'on veut revenir à la puissance initiale, le calculateur fournit les indications pour retour du cycle à quatre temps non suralimenté. Pour donner ces ordres, le calculateur tient compte, en particulier, de l'indication fournie par le conducteur sur la pédale d'accélérateur et aussi, notamment, d'une valeur mesurée du couple moteur.

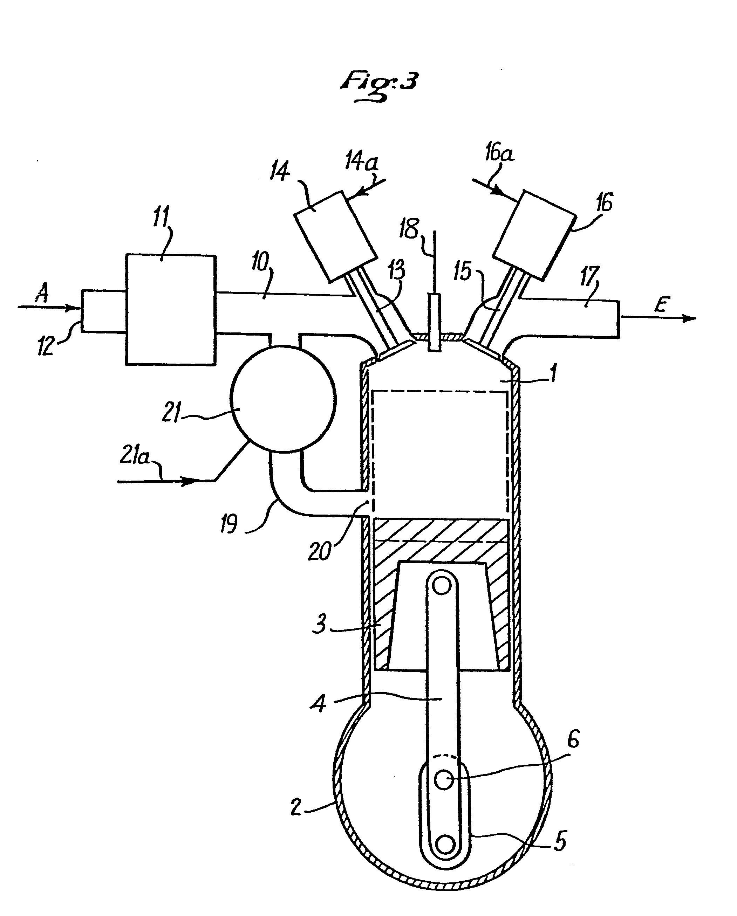

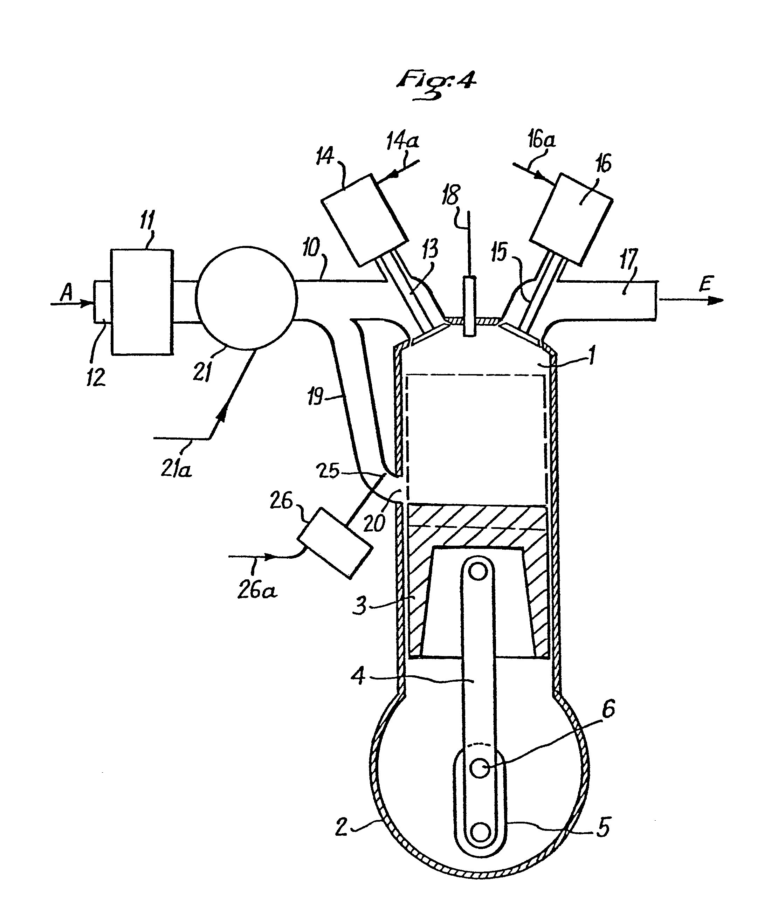

Les fig. 3 et 4 montrent des variantes de réalisation dans lesquelles le cycle à deux temps est obtenu sans précompression dans le carter 2 et sans transfert du mélange carburé ou de l'air. Les canaux de transfert 7, l'électrovanne 9 et le dispositif 23 sont également supprimés. La lubrification est assurée classiquement par projection d'huile.

Dans le système de la fig. 3, le compresseur 21 est obligatoirement utilisé et activé comme précédemment, mais le canal 19 relie la sortie dudit compresseur au cylindre 1 par l'intermédiaire d'un orifice 20 situé dans sa paroi, immédiatement au-dessus du piston 3 lorsque celui-ci est au point mort bas.

En fonctionnement à deux temps, la pression d'admission de gaz dans le cylindre est uniquement fournie par le compresseur 21.

Les autres éléments du système de la fig. 2 restent semblables et sont indiqués par les mêmes références.

Il est possible d'ajouter dans le canal 19 une électrovanne telle que 8, 9, 9a au voisinage de l'orifice 20 dans le cylindre 1, celle-ci obturant le canal 19 pendant les phases de fonctionnement dudit moteur selon un cycle à quatre temps.

Sur la fig. 4, on a représenté un mode de réalisation de l'invention selon lequel une suralimentation variable est effectuée aussi bien selon le cycle à deux temps que selon le cycle à quatre temps.

L'alimentation en cycle à deux temps peut se faire avec ou sans transfert par le carter 2. Elle est représentée ici sans transfert. Par rapport à la réalisation selon la fig. 1, le canal 19 rejoint directement la tubulure d'admission 10, le compresseur 21 étant placé entre le raccord de 10 et 19 et le dispositif carburateur 11, si celui-ci est utilisé. Une électrovanne 26 obture le canal 19 près du cylindre 1, à l'aide d'une vanne 25, pendant les phases de fonctionnement selon un cycle à quatre temps. Cette électrovanne 26 est commandée par le calculateur et reliée à celui-ci par une connexion 26a.

Les autres éléments restent semblables à ceux de réalisations précédemment décrites.

Selon cette réalisation, la loi de régime du compresseur 21 n'est pas une fonction directe du régime du moteur. Le compresseur 21 est entraîné soit par un moteur électrique à vitesse variable, déterminée par exemple par ledit calculateur, soit par l'arbre moteur par l'intermédiaire d'un variateur de vitesse commandé soit par ledit calculateur, soit par un dispositif mécanique ou électromécanique prenant en compte la position de l'accélérateur et la charge du moteur.

Par exemple, lorsque le moteur selon l'invention fonctionne selon un cycle à quatre temps, qu'il est à la limite de sa puissance maximale avec une alimentation sensiblement normale, et qu'un petit supplément de puissance lui est demandé, il est possible de suralimenter le moteur, ce qui peut être préférable que de passer à un fonctionnement en cycle à deux temps. Cette variation d'alimentation à régime sensiblement constant assure également une solution de continuité lors des passages de fonctionnement quatre temps/deux temps, qui peuvent être séparés par une phase à quatre temps suralimentée.

Une suralimentation est également utile pendant une phase de fonctionnement à deux temps, lorsque la charge augmente et que le moteur fournit sa puissance maximale avec une alimentation normale.

Cette variation d'alimentation permet de linéariser la courbe de puissance du moteur sur une plage réduite de régimes, ce qui permet d'optimiser sa consommation de carburant.

Ainsi, dans une plage réduite de régimes et éventuellement à régime constant, le moteur selon l'invention peut fournir une plage de couples importante.

Lorsque le transfert des gaz par le carter n'est pas utilisé pour le fonctionnement à deux temps, il est intéressant que le compresseur tourne par exemple 1,5 à 2 fois plus vite, pendant une telle phase de fonctionnement, par rapport à une phase de fonctionnement à quatre temps, celui-ci devant dans ce cas fournir à lui seul la pression de remplissage du cylindre.

**Revendications**

1. Ensemble d'un moteur thermique du type à cycle à quatre temps pourvu de soupapes d'admission (13) et d'échappement (15) et de moyens susceptibles de mettre ledit moteur en fonctionnement selon un cycle à deux temps, caractérisé en ce qu'il est pourvu d'un système de commande comportant un calculateur qui règle l'ouverture et la fermeture desdites soupapes et qui impose audit moteur un fonctionnement proche de celui correspondant à la consommation spécifique minimale en carburant, en ce que ledit système comporte des moyens (28, 29) susceptibles de détecter les surcharges du moteur, et en ce que les moyens (7, 9a, 14a, 16a, 20, 21a, 26a) susceptibles de faire fonctionner exceptionnellement le moteur selon un cycle à deux temps sont actionnés par lesdits moyens de détection, lorsque la surcharge détectée dépasse un seuil prédéterminé, pour qu'alors le moteur passe en fonctionnement à deux temps, le fonctionnement à quatre temps étant utilisé dès que la surcharge a disparu.

2. Ensemble selon la revendication 1, dans lequel le moteur comporte une tubulure d'admission aboutissant à la ou aux soupapes d'admission, caractérisé en ce qu'il comporte une dérivation reliant ladite tubulure à une lumière disposée sur la paroi du cylindre du moteur, et en ce que ladite dérivation est obturable de façon commandée par ledit calculateur.

3. Ensemble selon la revendication 2, caractérisé en ce que le moteur comprend un ou plusieurs canaux de transfert connectant son carter étanche à un ou plusieurs orifices disposés sur la paroi du cylindre, immédiatement au-dessus dudit piston lorsque celui-ci est au point mort bas, mais obturé par celui-ci au point mort haut, en ce que lesdits canaux de transfert sont obturables de façon commandée par ledit calculateur, et en ce que ladite lumière se trouve obturée par le piston lorsque celui-ci est au point mort bas, mais dégagée lorsque le piston est au point mort haut.

4. Ensemble selon la revendication 2, caractérisé en ce que ladite lumière se trouve obturée par le piston lorsque celui-ci est au point mort haut, mais dégagée lorsque le piston est au point mort bas.

5. Ensemble selon l'une des revendications 2 à 4, caractérisé en ce que ladite dérivation est obturable par un compresseur.

6. Ensemble selon l'une des revendications 2 à 4, caractérisé en ce que ladite dérivation est obturable par une électrovanne et en ce qu'un compresseur est disposé sur la tubulure d'admission.

7. Ensemble selon l'une des revendications 5 ou 6, caractérisé en ce que la vitesse de rotation du compresseur est indépendante de la vitesse de rotation du moteur.

## Claims

1. Thermal engine assembly of the four-stroke cycle type provided with inlet (13) and exhaust (15) valves and means adapted to cause said engine to operate in two-stroke mode, characterized in that it is provided with a control system comprising a computer which regulates opening and closure of said valves and which imposes on said engine an operation close to the one corresponding to minimum specific fuel consumption, in that said system comprises means (28, 29) adapted to detect overloads of the engine and in that the means (7, 9a, 14a, 16a, 20, 21a, 26a) adapted to cause the engine to operate exceptionally in two-stroke mode are actuated by said detection means when the detected overload exceeds a predetermined threshold so that the engine in that case passes to two-stroke operation, four-stroke operation being resumed as soon as the overload has disappeared.

2. The assembly of Claim 1, in which the engine comprises an inlet manifold terminating in one or each inlet valve, characterized in that it comprises a by-pass connecting said manifold to a port disposed in the wall of the cylinder of the engine, and said by-pass may be closed by said computer.

3. The assembly of Claim 2, characterized in that the engine comprises one or more transfer passages connecting its sealed crank case to one or more ports disposed in the wall of the cylinder immediately above said piston when the latter is at bottom dead centre, but obturated thereby at top dead centre, said transfer passages may be closed by said computer and said port is obturated by the piston when the latter is at bottom dead centre, but released when the piston is at top dead centre.

4. The assembly of Claim 2, wherein said port is obturated by the piston when the latter is at top dead centre, but released when the piston is at bottom dead centre.

5. The assembly of one of Claims 2 to 4, characterized in that said by-pass may be closed by a supercharger.

6. The assembly of one of Claims 2 to 4, characterized in that said by-pass may be closed by an electrovalve and a supercharger is disposed in the inlet manifold.

7. The assembly of one of Claims 5 or 6, characterized in that the speed of rotation of the supercharger is independent of the speed of rotation of the engine.

## Patentansprüche

1. Viertaktverbrennungsmotoreinheit mit Einlass- (13) und Auslassventilen (15) sowie Einrichtungen, durch die der Motorbetrieb auf Zweitaktbetrieb umgestellt werden kann, dadurch gekennzeichnet, dass eine Steuerung vorgesehen ist, die aus einem Rechner besteht, der das Öffnen und Schliessen der Ventile regelt und der dem Motor einen Betrieb in der Nähe des minimalen spezifischen Kraftstoffverbrauchs vorschreibt, dass das System eine Einrichtung (28, 29) besitzt, durch die Überlastungen des Motors erfasst werden, und dass Mittel (7, 9a, 14a, 16a, 20, 21a, 26a) vorgesehen sind, durch die der Motor in den Ausnahmezweitaktbetrieb übergeht und die durch die Erfassungseinrichtung dann betätigt werden, wenn die erfasste Überbelastung einen vorgegebenen Schwellenwert übersteigt, so dass demnach der Motor den Zweitaktbetrieb aufnimmt, wobei der Viertaktbetrieb zur Anwendung kommt, sobald die Überlastung nicht mehr besteht.

2. Motoreinheit nach Anspruch 1, bei der der Motor eine Einlassleitung aufweist, die in das oder die Einlassventile aufläuft, dadurch gekennzeichnet, dass eine Ableitung vorgesehen ist, die die Leitung mit einer Öffnung verbindet, die auf der Wand des Motorzylinders liegt, und dass die Ableitung vom Rechner durch Steuern verschlossen werden kann.

3. Motoreinheit nach Anspruch 2, dadurch gekennzeichnet, dass der Motor einen oder mehrere Entladungskanäle aufweist, durch die dessen dichtes Gehäuse mit einer oder mehreren Öffnungen verbinden wird, die an der Zylinderwand unmittelbar über dem Kolben liegen, wenn er sich am unteren Totpunkt befindet, jedoch am oberen Totpunkt durch ihn verschlossen ist, dass die Entladungskanäle durch Steuern vom Rechner verschliessbar sind und dass die Öffnung vom Kolben dann verschlossen ist, wenn er am unteren Totpunkt ist, und dann frei ist, wenn er am oberen Totpunkt ist.

4. Motoreinheit nach Anspruch 2, dadurch gekennzeichnet, dass die Öffnung vom Kolben dann verschlossen ist, wenn er sich am oberen Totpunkt befindet, dagegen frei ist, wenn der Kolben sich am unteren Totpunkt befindet.

5. Motoreinheit nach einem der Ansprüche 2 bis 4, dadurch gekennzeichnet, dass die Ableitung durch einen Kompressor verschliessbar ist.

6. Motoreinheit nach einem der Ansprüche 2 bis 4, dadurch gekennzeichnet, dass die Ableitung von einem Schaltschütz verschliessbar ist und dass der Kompressor an der Einlassleitung angeordnet ist.

7. Motoreinheit nach einem der vorhergehenden Ansprüche 5 oder 6, dadurch gekennzeichnet, dass die Drehgeschwindigkeit des Kompressors von der Drehgeschwindigkeit des Motors unabhängig ist.

*Fig.1*

0 058 619

*Fig. 2*

9

Fig:3

Fig. 4